(19) Europäisches Patentamt
European Patent Office
Office européen des brevets

(11) EP 4 404 300 A1

(12) **EUROPEAN PATENT APPLICATION**

(43) Date of publication:
24.07.2024 Bulletin 2024/30

(21) Application number: 23212562.5

(22) Date of filing: 28.11.2023

(51) International Patent Classification (IPC):
$H01M\ 4/36^{(2006.01)}$    $H01M\ 4/525^{(2010.01)}$
$H01M\ 4/62^{(2006.01)}$    $H01M\ 10/0525^{(2010.01)}$
$H01M\ 4/131^{(2010.01)}$    $H01M\ 4/02^{(2006.01)}$

(52) Cooperative Patent Classification (CPC):
H01M 4/364; H01M 4/525; H01M 4/625;
H01M 10/0525; H01M 4/131; H01M 2004/021;
H01M 2004/028

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.01.2023 JP 2023007024

(71) Applicant: Prime Planet Energy & Solutions, Inc.
Chuo-ku
Tokyo
103-0022 (JP)

(72) Inventors:
• TABUSHI, Akihiro
Tokyo, 103-0022 (JP)
• KATO, Yo
Tokyo, 103-0022 (JP)
• OHARA, Keisuke
Tokyo, 103-0022 (JP)

(74) Representative: Kuhnen & Wacker
Patent- und Rechtsanwaltsbüro PartG mbB
Prinz-Ludwig-Straße 40A
85354 Freising (DE)

(54) **POSITIVE ELECTRODE AND NON-AQUEOUS ELECTROLYTE SECONDARY BATTERY**

(57) The present disclosure provides a positive electrode (100) including a positive electrode composite material layer (20), wherein the positive electrode composite material layer (20) includes an active material particle (21) and a carbon nanotube (22), a content of the carbon nanotube (22) is 0.45 wt% or less based on 100 wt% of a total solid content of the positive electrode composite material layer (20) as a reference, and a composite material layer area resistivity of the positive electrode composite material layer (20) is 0.10 $\Omega \cdot cm^2$ or more. According to the present disclosure, there are provided: the positive electrode (100) that is excellent in charging/discharging efficiency and that can exhibit a high capacity and a high fusing/disconnection property; and a battery (200) including the positive electrode (100).

FIG.1

**Description**

CROSS REFERENCE TO RELATED APPLICATIONS

This nonprovisional application is based on Japanese Patent Application No. 2023-007024 filed on January 20, 2023 with the Japan Patent Office, the entire contents of which are hereby incorporated by reference.

BACKGROUND OF THE INVENTION

Field of the Invention

The present invention relates to a positive electrode and a non-aqueous electrolyte secondary battery (hereinafter also referred to as a battery) including the positive electrode.

Description of the Background Art

Each of Japanese Patent Laying-Open No. 2018-139213, Japanese Patent Laying-Open No. 2022-114665, and Japanese Patent Laying-Open No. 2022-100812 proposes that a carbon nanotube (hereinafter also referred to as a CNT) is used as a conductive material in a positive electrode of a battery.

SUMMARY OF THE INVENTION

When the CNT is used as the conductive material in a positive electrode composite material layer of the battery, an output property and a high-rate property can be improved due to high conductivity of the CNT. Further, when the content of the CNT is reduced in the positive electrode composite material layer and the content of a positive electrode active material is increased, a high energy density (high capacity) can be attained. On the other hand, when the CNT is used for the positive electrode composite material layer, an electrode fusing/disconnection property (hereinafter also referred to as a fusing/disconnection property) is decreased in response to a decrease in composite material layer resistance, disadvantageously.

An object of the present invention is to provide: a positive electrode that is excellent in charging/discharging efficiency and that can exhibit a high initial capacity and a high fusing/disconnection property; and a battery including the positive electrode.

The present invention provides the following positive electrode and battery.

[1] A positive electrode comprising a positive electrode composite material layer, wherein

the positive electrode composite material layer includes an active material particle and a CNT,
a content of the CNT is 0.45 wt% or less based on 100 wt% of a total solid content of the positive electrode composite material layer as a reference, and
a composite material layer area resistivity of the positive electrode composite material layer is $0.10 \, \Omega \cdot cm^2$ or more.

[2] The positive electrode according to [1], wherein the content of the CNT is 0.15 wt% or more.
[3] The positive electrode according to [1] or [2], wherein the composite material layer area resistivity is less than $0.45 \, \Omega \cdot cm^2$.
[4] The positive electrode according to any one of [1] to [3], wherein a composite material packing density of the positive electrode composite material layer is 3.5 $g/cm^3$ or more.
[5] The positive electrode according to any one of [1] to [4], wherein a Ni ratio of the active material particle is 60% or less.
[6] The positive electrode according to any one of [1] to [5], wherein the active material particle include a large particle and a small particle.
[7] The positive electrode according to [6], wherein an average particle size of the large particle is 12 to 20 $\mu$m.
[8] The positive electrode according to [6] or [7], wherein an average particle size of the small particle is 2 to 6 $\mu$m.
[9] The positive electrode according to any one of [6] to [8], wherein a ratio of an average particle size of the small particle to an average particle size of the large particle is 1/10 to 1Z2.
[10] The positive electrode according to any one of [1] to [9], wherein the CNT includes a surface-modified CNT.
[11] The positive electrode according to any one of [1] to [10], wherein the positive electrode composite material layer further includes an additive agent.
[12] A battery comprising the positive electrode according to any one of [1] to [11].

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a schematic diagram showing an exemplary configuration of a positive electrode in the present embodiment.
Fig. 2 is a schematic flowchart showing a method of manufacturing a positive electrode.
Fig. 3 is a schematic diagram showing an exemplary configuration of a battery according to the present embodiment.
Fig. 4 is a schematic diagram showing an exemplary configuration of an electrode assembly according to the present embodiment.

DESCRIPTION OF THE PREFERRED EMBODIMENTS

Hereinafter, embodiments of the present invention will be described with reference to figures, but the present invention is not limited to the below-described embodiments. In each of all the figures described below, a scale is appropriately adjusted to facilitate understanding of each component, and the scale of each component shown in the figures does not necessarily coincide with the actual scale of the component.

<Positive Electrode>

A positive electrode includes a positive electrode composite material layer. The positive electrode composite material layer includes an active material particle and a CNT. A content of the CNT in the positive electrode composite material layer is 0.45 wt% or less based on 100 wt% of a total solid content of the positive electrode composite material layer as a reference. Since the content of the CNT in the positive electrode composite material layer is within the above range, charging/discharging efficiency tends to be excellent and high initial capacity and high fusing/disconnection property tend to be likely exhibited. The content of the CNT in the positive electrode composite material layer is preferably 0.40 wt% or less based on 100 wt% of the total solid content of the positive electrode composite material layer as a reference from the viewpoint of the charging/discharging efficiency, initial capacity, and fusing/disconnection property. The content of the CNT in the positive electrode composite material layer is preferably 0.15 wt% or more based on 100 wt% of the total solid content of the positive electrode composite material layer as a reference from the viewpoint of the charging/discharging efficiency. The CNT will be described in detail later.

A composite material layer area resistivity of the positive electrode composite material layer is 0.10 $\Omega \cdot cm^2$ or more. When the composite material layer area resistivity of the positive electrode composite material layer is in the above-described range, the charging/discharging efficiency tends to be excellent and high initial capacity and high fusing/disconnection property tend to be likely exhibited. The composite material layer area resistivity of the positive electrode composite material layer is preferably 0.11 $\Omega \cdot cm^2$ or more, and more preferably 0.12 $\Omega \cdot cm^2$ or more from the viewpoint of the fusing/disconnection property. The composite material layer area resistivity of the positive electrode composite material layer is preferably less than 0.45 $\Omega \cdot cm^2$, and more preferably 0.40 $\Omega \cdot cm^2$ or less from the viewpoint of the charging/discharging efficiency. The composite material layer area resistivity of the positive electrode composite material layer can be controlled, for example, by adjusting the type of the CNT and the content of the CNT or by adjusting a condition of kneading process for a composite material layer slurry. The composite material layer area resistivity of the positive electrode composite material layer is measured in accordance with a method described in the below-described section "Examples".

The active material particle may be a particle containing a lithium transition metal composite oxide. A crystal structure of the lithium transition metal composite oxide is not particularly limited, and may be a lamellar structure, a spinel structure, an olivine structure, or the like. As the lithium transition metal composite oxide, a lithium transition metal composite oxide including at least one of Ni, Co, and Mn as a transition metal element is preferable, and specific examples thereof include a lithium-nickel-based composite oxide, a lithium-cobalt-based composite oxide, a lithium-manganese-based composite oxide, a lithium-nickel-manganese-based composite oxide, a lithium-nickel-cobalt-manganese-based composite oxide, a lithium-nickel-cobalt-aluminum-based composite oxide, a lithium-iron-nickel-manganese-based composite oxide, and the like. When the active material particle includes nickel, a ratio of the content of nickel to the metal elements other than lithium in the active material particle may be, for example, 60 mol% or less. The active material particle may be surface-coated.

The active material particle may include, for example, a lamellar metal oxide. The lamellar metal oxide is represented by the following formula (1):

$$Li_{1-a1}Ni_{x1}Me^1_{1-x1}O_2 \qquad (1)$$

In the formula (1), "a1" satisfies the relation "$-0.3 \leq a1 \leq 0.3$". "x1" satisfies the relation "$0.1 \leq x1 \leq 0.6$". "$Me^1$" represents at least one selected from a group consisting of Co, Mn, Al, Zr, Ti, V, Cr, Fe, Cu, Zn, B, Mo, Sn, Ge, Nb, and W.

The active material particle can include a plurality of large particles and a plurality of small particles. The large particles have an average particle size larger than that of the small particles. The average particle size of the large particles may be, for example, 12 μm or more and 20 μm or less, and is preferably 14 μm or more and 18 μm or less. The average particle size of the small particles may be, for example, 2 μm or more and 6 μm or less, and is preferably 3 μm or more and 6 μm or less. In the present specification, the average particle size represents a particle size (hereinafter also referred to as D50) corresponding to a cumulative particle volume of 50% from the small particle size side with respect to the total particle volume in the volume-based particle size distribution. The average particle size can be measured by a laser diffraction/scattering method. A ratio of the average particle size of the small particles to the average particle size of the large particles can be, for example, 1/10 to 1/2.

The content of the active material particle in the positive electrode composite material layer may be, for example, 70 wt% or more, is preferably 80 to 99 wt%, and is more preferably 90 to 99 wt% or less, based on 100 wt% of the total solid content of the positive electrode composite material layer as a reference.

The CNT is fibrous carbon having such a structure that graphene that forms a carbon hexagonal network is rounded into a tubular shape. The CNT has a high aspect ratio and a property with an excellent electron conductivity. Examples of the CNT include: a single-walled CNT composed of one layer of graphene; a multi-walled CNT composed of two or more layers of graphene; and the like. The multi-walled CNT is preferable from the viewpoint of thermal and chemical stabilities. The CNT preferably include a CNT surface-modified by acid treatment, heat treatment, or the like.

As the CNT, a commercially available CNT may be purchased and used, or a CNT produced by a conventionally known CNT manufacturing method may be used. Examples of such a method include a chemical vapor deposition (CVD) method, an arc discharging method, a laser evaporation method, and the like.

The positive electrode composite material layer may include a conductive material other than the CNT. As the conductive material other than the CNT, for example, a carbon black such as acetylene black (AB) or another carbon material (for example, graphite) can be suitably used.

The positive electrode composite material layer can include a binder. Examples of the binder include polyvinylidene difluoride (PVDF), polytetrafluoroethylene (PTFE), polyimide (PI), polyamide (PA), polyamideimide (PAI), butadiene rubber (BR), styrene-butadiene rubber (SBR), nitrile-butadiene rubber (NBR), styrene-ethylene-butylene-styrene block copolymer (SEBS), carboxymethyl cellulose (CMC), a combination thereof, and the like. The content of the binder in the positive electrode composite material layer may be, for example, 0.5 to 10 wt%, and is preferably 1.0 to 5 wt%, based on 100 wt% of the total solid content of the positive electrode composite material layer as a reference. The positive electrode composite material layer may include a known additive agent that can be used for the positive electrode.

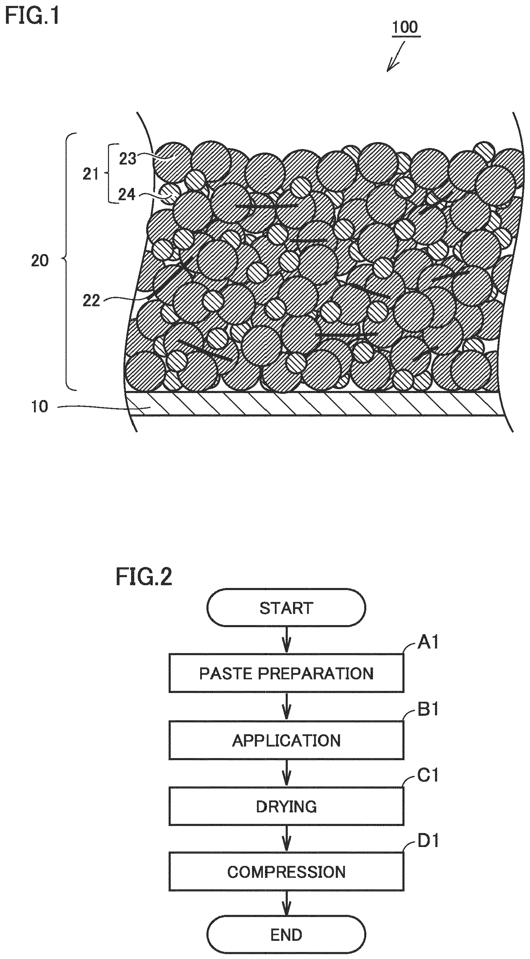

In a positive electrode 100 shown in Fig. 1, a positive electrode composite material layer 20 is formed on a positive electrode substrate 10. Positive electrode composite material layer 20 may be formed directly or indirectly on one or both surfaces of positive electrode substrate 10. Positive electrode substrate 10 may be a conductive sheet composed of, for example, an Al alloy foil, a pure Al foil, or the like. Positive electrode composite material layer 20 includes active material particles 21 and CNTs 22. Positive electrode composite material layer 20 can further include a binder, an additive agent, and the like. Active material particles 21 include large particles 23 and small particles 24.

Positive electrode composite material layer 20 may have a thickness of, for example, 10 μm or more and 200 μm or less. Positive electrode composite material layer 20 can have a high density. The density of positive electrode composite material layer 20 may be, for example, 3.5 g/cm³ or more, or may be 3.7 g/cm³ or more, 3.8 g/cm³ or more, or 3.9 g/cm³ or more. The density of positive electrode composite material layer 20 may be, for example, 4.0 g/cm³ or less.

As shown in Fig. 2, a method of manufacturing positive electrode 100 according to the present embodiment includes positive electrode slurry preparation (A1), application (B1), drying (C1), and compression (D1).

In the positive electrode slurry preparation (A1), a positive electrode slurry including the active material particles and the CNTs is prepared. The positive electrode slurry is prepared by dispersing the active material particles in a dispersion medium. An organic solvent can include, for example, at least one selected from a group consisting of N-methyl-2-pyrrolidone (NMP), tetrahydrofuran (THF), dimethylformamide (DMF), methyl ethyl ketone (MEK) and dimethyl sulfoxide (DMSO). Any amount of the organic solvent is usable. The positive electrode slurry can have any solid content concentration (mass fraction of the solid content). The slurry can have a solid content concentration of, for example, 40% to 80%. Any stirring device, mixing device, or dispersing device can be used for the mixing.

The application (B 1) can include applying the positive electrode slurry onto a surface of the substrate so as to form a coating film. In the present embodiment, the positive electrode slurry can be applied to the surface of the substrate by any application device. For example, a slot die coater, a roll coater, or the like may be used. The application device may be capable of performing multi-layer application.

The drying (C1) can include heating and drying the coating film. In the present embodiment, any drying device can be used as long as the coating film can be heated. For example, the coating film may be heated by a hot-air dryer or the like. The organic solvent can be evaporated by heating the coating film. With this, the organic solvent can be substantially removed.

The compression (D1) can include compressing the dried coating film to form positive electrode composite material layer 20. In the present embodiment, any compression device can be used. For example, a rolling machine or the like may be used. The dried coating film is compressed to form positive electrode composite material layer 20, thereby completing positive electrode 100. Positive electrode 100 can be cut into a predetermined planar size in accordance with a specification of the battery. Positive electrode 100 may be cut to have a strip-shaped planar shape, for example. Positive electrode 100 may be cut to have a quadrangular planar shape, for example.

<Battery>

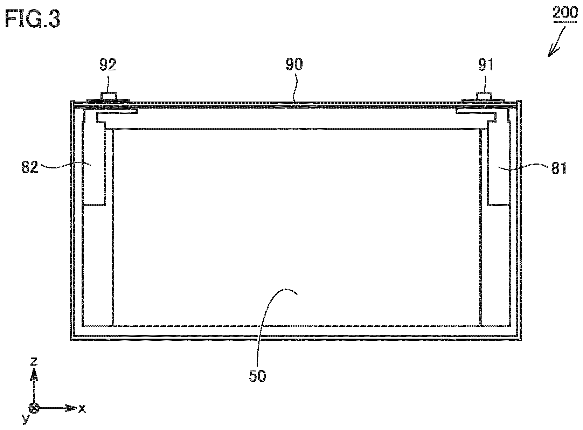

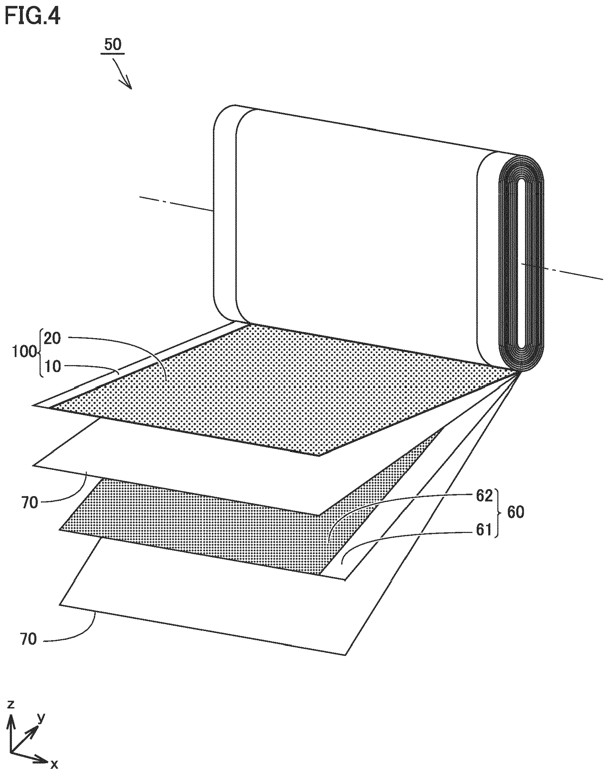

The battery can be a lithium ion battery. Fig. 3 is a schematic diagram showing an exemplary lithium ion battery according to the present embodiment. A battery 200 shown in Fig. 3 may be, for example, a lithium ion battery for a main electric power supply, a motive power assisting electric power supply, or the like in an electrically powered vehicle. Battery 200 includes an exterior package 90. Exterior package 90 accommodates an electrode assembly 50 and a non-aqueous electrolyte (not shown). Electrode assembly 50 is connected to a positive electrode terminal 91 by a positive electrode current collecting member 81. Electrode assembly 50 is connected to a negative electrode terminal 92 by a negative electrode current collecting member 82. Fig. 4 is a schematic diagram showing an exemplary electrode assembly according to the present embodiment. Electrode assembly 50 is of a wound type. Electrode assembly 50 includes positive electrode 100, separators 70, and a negative electrode 60. That is, battery 200 includes positive electrode 100. Positive electrode 100 includes positive electrode composite material layer 20 and positive electrode substrate 10. Negative electrode 60 includes a negative electrode active material layer 62 and a negative electrode substrate 61.

The non-aqueous electrolyte includes a solvent and a lithium salt. The solvent is aprotic. The solvent can include any component. The solvent may include, for example, at least one selected from a group consisting of ethylene carbonate (EC), propylene carbonate (PC), butylene carbonate (BC), dimethyl carbonate (DMC), ethyl methyl carbonate (EMC), diethyl carbonate (DEC), 1,2-dimethoxyethane (DME), methyl formate (MF), methyl acetate (MA), methyl propionate (MP), and $\gamma$-butyrolactone (GBL).

The lithium salt is a supporting electrolyte. The lithium salt is dissolved in a solvent. The lithium salt may include, for example, at least one selected from a group consisting of $LiPF_6$, $LiBF_4$, and $LiN(FSO_2)_2$. The lithium salt may have a molar concentration of, for example, 0.5 mol/L or more and 2.0 mol/L or less, or may have a molar concentration of 0.8 mol/L or more and 1.2 mol/L or less.

The non-aqueous electrolyte may further include any additive agent in addition to the solvent and the lithium salt. For example, the electrolyte solution may include an additive agent at a mass fraction of 0.01% or more and 5% or less. The additive agent may include, for example, at least one selected from a group consisting of vinylene carbonate (VC), vinylethylene carbonate (VEC), and the like.

[Examples]

Hereinafter, the present invention will be described in more detail with reference to examples. "%" and "parts" in the examples are mass% and parts by mass unless otherwise stated particularly.

<Example 1>

Active material particles 1 (lithium nickel composite oxide with a particle size of 14 to 18 $\mu$m) and active material particles 2 (lithium nickel composite oxide with a particle size of 3 to 6 $\mu$m) were mixed at a ratio of 1:1, mixing was performed such that the mixture had 98.55 parts by mass, CNTs each serving as a conductive material had 0.45 parts by mass, and PVdF serving as a binder had 1.0 parts by mass, and an appropriate amount of N-methyl-2-pyrrolidone (NMP) was further added, thereby preparing a positive electrode composite material slurry. The slurry was applied to a current collector composed of aluminum foil, thereby forming a positive electrode composite material layer. Thereafter, drying was performed, rolling was performed to attain a predetermined thickness using a roller, cutting was performed to attain a predetermined size, and an aluminum tab was attached, thereby forming a positive electrode.

<Examples 2 to 5 and Comparative Examples 1 to 3>

Each of positive electrodes was produced in the same manner as in Example 1 except that a conductive material and a blending ratio of the conductive material in the composite material layer as shown in Table 1 were employed.

[Production of Negative Electrode]

A graphite negative electrode active material, carboxymethyl cellulose (CMC) serving as a thickener, and styrene-butadiene rubber (SBR) serving as a binder were measured in amount to attain a mass ratio of 98:1:1, and were dispersed in water, thereby preparing a negative electrode composite slurry. The negative electrode composite slurry was applied to a current collector composed of a copper foil, thereby forming a negative electrode composite material layer. Thereafter, drying was performed, rolling was performed to attain a predetermined thickness using a roller, cutting was performed to attain a predetermined size, and a nickel tab was attached, thereby forming a negative electrode.

[Preparation of Non-Aqueous Electrolyte]

Ethylene carbonate (EC), dimethyl carbonate (DMC) and ethyl methyl carbonate (EMC) were mixed at a volume ratio of 30:30:40. Lithium hexafluorophosphate ($LiPF_6$) was added to the mixed solvent to attain a concentration of 1.15 mol/liter. Further, vinylene carbonate (VC) was added to have an addition ratio of 1.0 mass% with respect to the total mass of this mixed solvent, thereby preparing a non-aqueous electrolyte.

[Evaluation on Composite Material Layer Area Resistivity of Positive Electrode Composite Material Layer]

The volume resistivity of the aluminum foil serving as the current collector was 2.70E-06 [S2], and the composite material layer area resistivity ($\Omega \cdot cm^2$) of the positive electrode composite material layer of the positive electrode plate was measured using an electrode resistance measurement system (RM2610 provided by HIOKI). Results are shown in Table 1.

[Evaluations on Initial Capacity and Charging/Discharging Efficiency]

(Production of Test Cell)

The positive electrode and the negative electrode produced above were stacked with a separator composed of polyolefin being interposed therebetween, thereby producing a stack type electrode assembly. This electrode assembly was accommodated in an exterior package composed of an aluminum laminate sheet, the non-aqueous electrolyte prepared above was introduced thereinto, and the opening of the exterior package was then sealed, thereby obtaining a test cell.

(Evaluations on Initial Capacity and Charging/Discharging Efficiency)

For the test cell produced above, constant-current charging was performed under a temperature condition of 25°C until 4.25 V was attained at a current density of 0.2 mA/cm$^2$, and constant-voltage charging was further performed until a current density of 0.04 mA/cm$^2$ was attained at 4.25 V, thereby finding a charging capacity (initial capacity). After 10 minutes of resting, constant-current discharging was performed until 3.0 V was attained at a current density of 0.2 mA/cm$^2$, thereby finding a discharging capacity. The charging/discharging efficiency was calculated in accordance with the following formula using the discharging capacity and the charging capacity.

$$\text{Charging/Discharging Efficiency} = [\text{Discharging Capacity}] / [\text{Charging Capacity}] \times 100$$

A ratio was found when each of the initial capacity and charging/discharging efficiency of Comparative Example 1 was regarded as 100. Results are shown in Table 1.

[Evaluation on Fusing/Disconnection Property]

The test cell for evaluation on the electrode fusing/disconnection property was connected in parallel to a constant-voltage power supply having a maximum current of 200 A, and a nail penetration test was performed to cause flow of a current so as to simulate a large cell. A heat generation rate (W) after electrode fusing (after nail removal) was measured, and a ratio of the heat generation rate when the heat generation rate of Comparative Example 1 was regarded as 100 was found as the fusing/disconnection property. Results are shown in Table 1.

[Table 1]

| | Type of Conductive Material | Blending Ratio of Conductive Material in Composite Material Layer (wt%) | Composite Material Layer Area Resistivity (Ω·cm²) | Initial Capacity | Charging/ Discharging Efficiency | Fusing/ Disconnection Property | Determination |
|---|---|---|---|---|---|---|---|
| Comparative Example 1 | AB | 1.5 | 0.40 | 100 | 100.0 | 100 | X |
| Example 1 | CNT | 0.05 | 0.70 | 100 | 99.5 | 101 | ○ |
| Example 2 | CNT | 0.1 | 0.45 | 104 | 99.5 | 100 | ○ |
| Example 3 | CNT | 0.15 | 0.40 | 104 | 100.1 | 97 | ○ |
| Example 4 | CNT | 0.4 | 0.16 | 104 | 100.2 | 91 | ○ |
| Example 5 | CNT | 0.45 | 0.12 | 104 | 100.3 | 87 | ○ |
| Comparative Example 2 | CNT | 0.55 | 0.06 | 104 | 100.3 | 50 | X |
| Comparative Example 3 | CNT | 0.65 | 0.04 | 104 | 100.2 | 20 | X |

In Table 1, when the initial capacity was 100 or more, the charging/discharging efficiency was 99.5 or more, and the electrode fusing/disconnection property was 80 or more, it was determined as "O", and otherwise, it was determined as "X". In each of Examples 1 to 5 according to the present invention, excellent charging/discharging efficiency, high initial capacity, and high fusing/disconnection property could be attained.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

**Claims**

1. A positive electrode (100) comprising a positive electrode composite material layer (20), wherein

   the positive electrode composite material layer (20) includes an active material particle (21) and a carbon nanotube (22),
   a content of the carbon nanotube (22) is 0.45 wt% or less based on 100 wt% of a total solid content of the positive electrode composite material layer (20) as a reference, and
   a composite material layer area resistivity of the positive electrode composite material layer (20) is 0.10 $\Omega \cdot cm^2$ or more.

2. The positive electrode according to claim 1, wherein the content of the carbon nanotube (22) is 0.15 wt% or more.

3. The positive electrode according to claim 1, wherein the composite material layer area resistivity is less than 0.45 $\Omega \cdot cm^2$.

4. The positive electrode according to claim 1, wherein a composite material packing density of the positive electrode composite material layer (20) is 3.5 $g/cm^3$ or more.

5. The positive electrode according to claim 1, wherein a Ni ratio of the active material particle (21) is 60% or less.

6. The positive electrode according to claim 1, wherein the active material particle (21) includes a large particle (23) and a small particle (24).

7. The positive electrode according to claim 6, wherein an average particle size of the large particle (23) is 12 to 20 $\mu$m.

8. The positive electrode according to claim 6, wherein an average particle size of the small particle (24) is 2 to 6 $\mu$m.

9. The positive electrode according to claim 6, wherein a ratio of an average particle size of the small particle (24) to an average particle size of the large particle (23) is 1/10 to 1/Z.

10. The positive electrode according to claim 1, wherein the carbon nanotube (22) includes a surface-modified carbon nanotube.

11. The positive electrode according to claim 1, wherein the positive electrode composite material layer (20) further includes an additive agent.

12. A non-aqueous electrolyte secondary battery comprising the positive electrode (100) according to claim 1.

FIG.1

FIG.2

FIG.3

FIG.4

Europäisches
Patentamt

European
Patent Office

Office européen
des brevets

# EUROPEAN SEARCH REPORT

Application Number

EP 23 21 2562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/285690 A1 (LEE YONG SEOK [KR] ET AL) 8 September 2022 (2022-09-08) * paragraph [0010] - paragraph [0011] * * paragraph [0079] - paragraph [0080]; figure 1; table 1 * | 1-4,6-12 | INV. H01M4/36 H01M4/525 H01M4/62 H01M10/0525 H01M4/131 |
| X | JP 7 062157 B2 (LG CHEMICAL LTD) 6 May 2022 (2022-05-06) * paragraph [0002] * * paragraph [0139] - paragraph [0142] * | 1-6, 10-12 | ADD. H01M4/02 |
| X | US 2023/013168 A1 (UKA YOUICHIROU [JP] ET AL) 19 January 2023 (2023-01-19) * paragraph [0054] - paragraph [0057]; table 1 * | 1,3,4, 10-12 | |
| X | US 2022/393177 A1 (UEHARA YUKITOSHI [JP] ET AL) 8 December 2022 (2022-12-08) * paragraph [0043] - paragraph [0050] * | 1-3,5, 10-12 | |

TECHNICAL FIELDS
SEARCHED (IPC)

H01M

The present search report has been drawn up for all claims

| Place of search | Date of completion of the search | Examiner |
|---|---|---|
| The Hague | 23 May 2024 | Ramos Alonso, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 2562

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2024

| Patent document cited in search report | | Publication date | Patent family member(s) | | Publication date |
|---|---|---|---|---|---|
| US 2022285690 | A1 | 08-09-2022 | CN | 115050924 A | 13-09-2022 |
| | | | EP | 4057380 A2 | 14-09-2022 |
| | | | JP | 2022137007 A | 21-09-2022 |
| | | | KR | 20220126004 A | 15-09-2022 |
| | | | US | 2022285690 A1 | 08-09-2022 |
| JP 7062157 | B2 | 06-05-2022 | CN | 107925056 A | 17-04-2018 |
| | | | EP | 3319151 A1 | 09-05-2018 |
| | | | JP | 7027626 B2 | 02-03-2022 |
| | | | JP | 7062157 B2 | 06-05-2022 |
| | | | JP | 2018535520 A | 29-11-2018 |
| | | | JP | 2021007109 A | 21-01-2021 |
| | | | KR | 20170069153 A | 20-06-2017 |
| | | | US | 2018219212 A1 | 02-08-2018 |
| US 2023013168 | A1 | 19-01-2023 | CN | 115152050 A | 04-10-2022 |
| | | | EP | 4113656 A1 | 04-01-2023 |
| | | | JP | WO2021172441 A1 | 02-09-2021 |
| | | | US | 2023013168 A1 | 19-01-2023 |
| | | | WO | 2021172441 A1 | 02-09-2021 |
| US 2022393177 | A1 | 08-12-2022 | CN | 114868276 A | 05-08-2022 |
| | | | JP | WO2021124970 A1 | 24-06-2021 |
| | | | US | 2022393177 A1 | 08-12-2022 |
| | | | WO | 2021124970 A1 | 24-06-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023007024 A
- JP 2018139213 A
- JP 2022114665 A
- JP 2022100812 A